Europäisches Patentamt

(19) European Patent Office

Office européen des brevets

(11) EP 0 960 727 A2

# (12) EUROPEAN PATENT APPLICATION

(43) Date of publication:
01.12.1999 Bulletin 1999/48

(51) Int. Cl.$^6$: **B32B 27/32**

(21) Application number: 99109268.5

(22) Date of filing: 27.05.1999

(84) Designated Contracting States:
AT BE CH CY DE DK ES FI FR GB GR IE IT LI LU
MC NL PT SE
Designated Extension States:
AL LT LV MK RO SI

(30) Priority: 29.05.1998 JP 14970598
10.06.1998 JP 16204898

(71) Applicant:
Sumitomo Chemical Company, Limited
Chuo-ku Osaka 541-8550 (JP)

(72) Inventors:
• Ichige, Akihiro
Sodegaura-shi, Chiba (JP)

• Yamada, Takeshi
Suita-shi, Osaka (JP)
• Yanase, Koichi
Ichihara-shi, Chiba (JP)
• Mitsuno, Tadahiro
Ichihara-shi, Chiba (JP)
• Minaba, Takeshi
Ibaraki-shi, Osaka (JP)

(74) Representative:
VOSSIUS & PARTNER
Siebertstrasse 4
81675 München (DE)

(54) **Laminated uniaxial oriented sheet and adhesive tape formed using same**

(57) There are provided:

a laminated uniaxial oriented sheet comprising:

(i) a layer of a crystalline olefinic polymer; and
(ii) a layer of an ethylene based polymer having
an Fε value of not more than about $2.0 \times 10^{-1}$;
wherein Fε is an orientation function of a crystallographic "c" axis determined by an infrared
dichroism measurements; and a process for
producing the same; and

an adhesive tape comprising (a) a substrate and
(b) a layer of an adhesive, wherein the substrate
comprises a laminated uniaxial oriented sheet and
has heat shrinking percentage of not higher than
about 8%, and the laminated uniaxial oriented
sheet comprises (i) a layer of a crystalline olefinic
polymer and (ii) a layer of an ethylene based polymer; and a process for producing the same.

EP 0 960 727 A2

**Description**

The present invention relates to a laminated uniaxial oriented sheet that is superior in its tearability in a direction perpendicular to a sheet orientation direction and also superior in its tensile breaking strength in a sheet orientation direction and its heat-resisting property, and a process for producing the same.

The present invention also relates to an adhesive tape having a laminated uniaxial oriented sheet as a substrate, which is hardly heat-shrinkable, superior in its tensile breaking strength in a sheet orientation direction and satisfactory in its hand-tearability, and a process for producing the same.

In the specification of the present invention, the direction perpendicular to the sheet orientation direction and the sheet orientation direction are shortened into "transverse direction" and "machine direction", respectively. The term "satisfactory hand-tearability" is understood as meaning a property such that the sheet or the adhesive tape can be easily and readily torn in a widthwise direction, i.e. the transverse direction with a hand (fingertip) without using any cutting tool such as scissors or cutters having saw like teeth. In addition, the sheet also includes a film.

Generally speaking, an adhesive tape is composed of a substrate formed from resin, paper, cloth or other materials, and an adhesive layer formed on the substrate, and such an adhesive tape is usually commercially available in a form where it is wound up into a multilayer roll. When using such a roll-type adhesive tape, a desired length of it is unwound from the roll, and then a desired portion is cut off.

It is well known that while crystalline olefinic polymers such as polypropylene and high density polyethylene are mainly used as a starting material for a polyolefin-made uniaxial oriented sheet, it is difficult to tear the sheet in the transverse direction. Incidentally, it is said that the tear strength of the sheet in the transverse direction is 10 to 20 times that in the machine direction.

As a uniaxial oriented sheet of excellent tearability in the transverse direction (hand-tearability), JP-B-61-41732 proposes a uniaxial oriented sheet formed from, for example, a low density ethylene based resin such as low density polyethylene and a copolymer of ethylene with vinyl acetate.

However, the above proposed sheet waits for improvement with respect to tensile breaking strength in the machine direction and heat-resisting property.

In general, the adhesive tape is produced by coating a substrate with an adhesive and drying the coated substrate in a heating drier to remove a solvent contained in the adhesive. Now, the above proposed sheet coated with the adhesive heat-shrinks to an unacceptable extent during the heat-drying step, and therefore it cannot be said that the sheet is suitable as the substrate of the adhesive tape. Moreover, the above proposed sheet is insufficient in its tensile breaking strength, so that it is not suitable as the substrate of an adhesive tape used for packing materials.

An object of the present invention is to provide a laminated uniaxial oriented sheet that is superior in its tensile breaking strength in the machine direction and heat-resisting property as well as tearability in the transverse direction, and a process for producing the same.

Another object of the present invention is to provide an adhesive tape having a laminated uniaxial oriented sheet as a substrate, which is hardly heat-shrinkable, superior in its tensile breaking strength in the machine direction and satisfactory in hand-tearability, and a process for producing the same.

According to the present application the object to find a laminated uniaxial oriented sheet that is superior in its tearability in the transverse direction, and also superior in its tensile breaking strength in the machine direction and heat-resisting property and an adhesive tape having a laminated uniaxial oriented sheet as a substrate, which is hardly heat-shrinkable, superior in its tensile breaking strength in the machine direction and satisfactory in hand-tearability has been solved by the finding that the laminated uniaxial oriented sheet comprising a layer of a crystalline olefinic polymer and a layer of a specific ethylene based polymer can provide the desired sheet and tape, and thereby the present invention has been obtained.

The present invention provides a laminated uniaxial oriented sheet comprising:

(i) a layer of a crystalline olefinic polymer; and
(ii) a layer of an ethylene based polymer having an $F\varepsilon$ value of not more than about $2.0 \times 10^{-1}$;
wherein "$F\varepsilon$" is an orientation function of a crystallographic "c" axis determined by an infrared dichroism measurements.

The present invention also provides a process for producing a laminated uniaxial oriented sheet, which comprises the steps of:

(I) obtaining a laminated non-oriented sheet comprising (i)a layer of a crystalline olefinic polymer, and (ii)a layer of an ethylene based polymer; and
(II)orienting the laminated non-oriented sheet in a uniaxial direction at a temperature which is not lower than a main melt peak temperature of the ethylene based polymer, and not higher than a main melt peak temperature of the crystalline olefinic polymer.

The present invention further provides an adhesive tape comprising (a)a substrate and (b)a layer of an adhesive, wherein the substrate comprises a laminated uniaxial oriented sheet and has a heat shrinking percentage of not higher than about 8%, and the laminated uniaxial oriented sheet comprises (i)a layer of a crystalline olefinic polymer and (ii)a layer of an ethylene based polymer.

The present invention still further provides a process for producing an adhesive tape, which comprises the steps of:

(I) obtaining a laminated non-oriented sheet comprising (i)a layer of a crystalline olefinic polymer, and (ii)a layer of an ethylene based polymer;
(II) orienting the laminated non-oriented sheet in a uniaxial direction at a temperature which is not lower than a main melt peak temperature of the ethylene based polymer, and not higher than a main melt peak temperature of the crystalline olefinic polymer to obtain a substrate of a laminated uniaxial oriented sheet having a heat shrinking percentage of not higher than about 8%; and
(III) coating the substrate with an adhesive.

The present invention furthermore provides a process for producing an adhesive tape, which comprises the steps of:

(I) obtaining a laminated non-oriented sheet comprising (i)a layer of a crystalline olefinic polymer, and (ii)a layer of an ethylene based polymer;
(II) orienting the laminated non-oriented sheet in a uniaxial direction at a temperature which is not lower than a main melt peak temperature of the ethylene based polymer, and not higher than a main melt peak temperature of the crystalline olefinic polymer to obtain a laminated uniaxial oriented sheet;
(III) heat-setting the laminated uniaxial oriented sheet to obtain a substrate having a heat shrinking percentage of not higher than about 8%; and
(IV) coating the substrate with an adhesive.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The crystalline olefinic polymer used in the present invention is a crystalline thermoplastic polymer having not less than about 50% by weight of a repeating unit derived from an olefin. Examples thereof are crystalline high density polyethylene, crystalline medium density polyethylene, crystalline low density polyethylene, crystalline straight low density polyethylene, crystalline propylene based polymer and crystalline poly-4-methylpentene-1. To obtain a laminated uniaxial oriented sheet particularly superior in its tensile breaking strength in the machine direction and heat-resisting property, preferred is a crystalline olefinic polymer having a repeating unit derived from an olefin having 3 or more carbon atoms as a main component, such as crystalline propylene based polymer and crystalline poly-4-methylpentene-1, and more preferred is crystalline propylene based polymer.

The crystalline propylene based polymer is a crystalline thermoplastic polymer having not less than about 50% by weight of a repeating unit derived from propylene (hereinafter referred to as "propylene unit" for brevity). Examples of the crystalline propylene based polymer are propylene homopolymer, propylene-ethylene random copolymer, propylene—$\alpha$-olefin random copolymer and a block copolymer of propylene with ethylene and/or an $\alpha$-olefin having 4 to 10 carbon atoms. The $\alpha$-olefin having 4 to 10 carbon atoms includes, for example, butene-1, pentene-1, hexene-1, octene-1 and decene-1.

If desired, the crystalline olefinic polymer used in the present invention may comprise various additives such as, for example, antioxidants, anti-fogging agents, anti-static agents, nucleating agents, ultraviolet ray absorbers and pigments, and fillers. In addition, other resins including a recycled resin may be used together in such a way that the objects and effects of the present invention are not impaired.

The ethylene based polymer used in the present invention is a thermoplastic polymer having not less than about 50% by weight of a repeating unit derived from ethylene (hereinafter referred to as "ethylene unit" for brevity). Examples thereof are ethylene homopolymer and a copolymer of ethylene with an $\alpha$-olefin having 3 to 10 carbon atoms. Specific examples are low density polyethylene, medium density polyethylene, ethylene-propylene copolymer, ethylene-butene-1 copolymer, ethylene-4-methylpentene-1 copolymer, ethylene-hexene-1 copolymer, ethylene-octene-1 copolymer and ethylene-decene-1 copolymer.

Copolymers of ethylene with unsaturated compounds such as conjugated dienes and non-conjugated dienes and copolymers of ethylene with acrylic acid, methacrylic acid or vinyl acetate are also exemplified as the ethylene based polymer.

In addition, the ethylene based polymer may be a polymer prepared by modifying the aforementioned polymer with an acid, for example, a polymer prepared by grafting the aforementioned polymer with an $\alpha,\beta$-unsaturated carboxylic acid, an alicyclic acid or a derivative thereof.

Preferred ethylene based polymers are low density polyethylene, ethylene-vinyl acetate copolymer, ethylene-acrylic ester copolymer and ethylene-methacrylic ester copolymer.

More preferred ethylene based polymers are those obtained by a high pressure radical polymerization method. Particularly preferred ethylene based polymers are a low density polyethylene having a long chain branching and an ethylene-vinyl acetate copolymer having an ethylene unit content of about 70 to 95% by weight and a content of a repeating unit derived from vinyl acetate(hereinafter referred to as "vinyl acetate unit" for brevity) of about 30 to 5% by weight.

A method for preparing the ethylene based polymer used in the present invention is not particularly limited and includes, for example, high pressure radical polymerization, coordinated polymerization by a Ziegler catalyst, high pressure ionic polymerization and coordinated polymerization by a single site catalyst. Of these, high pressure radical polymerization affording a long chain branching structure and coordinated polymerization by a single site catalyst are preferred, and the former high pressure radical polymerization is more preferred.

If desired, the ethylene based polymer used in the present invention may comprise various additives such as, for example, antioxidants, anti-fogging agents, anti-static agents, nucleating agents, ultraviolet ray absorbers and pigments, and fillers. In addition, other resins including a recycled resin may be used together in such a way that the objects and effects of the present invention are not impaired.

Respective layers constituting the laminated uniaxial oriented sheet in accordance with the present invention is not particularly limited in their thickness. Usually, the thickness ranges from about 2 to 100 $\mu$m. A thickness proportion of the ethylene based polymer layer to the laminated uniaxial oriented sheet is not particularly limited, and usually from about 50 to 90%, preferably from about 60 to 90%.

While, respective layers constituting the substrate of the adhesive tape in accordance with the present invention is not particularly limited in their thickness. Usually, the thickness ranges from about 2 to 100 $\mu$m. A thickness proportion of the ethylene based polymer layer to the substrate is not particularly limited, and usually from about 20 to 90%, preferably from about 40 to 90%, more preferably from about 50 to 90%.

The laminated uniaxial oriented sheet of the present invention and the substrate of the adhesive tape of the present invention may comprise any further layer(s) such as a layer of a recycled resin or a layer of an adhesive, besides the crystalline olefinic polymer layer and the ethylene based polymer layer, so far as the objects and the effects of the present invention are not impaired.

The laminated uniaxial oriented sheet of the present invention and the substrate of the adhesive tape of the present invention can be produced, for example, by obtaining a laminated non-oriented sheet comprising the crystalline olefinic polymer layer and the ethylene based polymer layer by any known method such as, for example, a heat adhesion method, an extrusion lamination method, a dry lamination method and a co-extrusion method including a T-die molding method and an inflation molding method, and then orienting the laminated non-oriented sheet in a uniaxial direction.

In producing the laminated uniaxial oriented sheet and the substrate of the adhesive tape, a manner of orienting the laminated non-oriented sheet is not particularly limited. For example, the orientation can be performed by means of a heat roll or other means that are known per se. A temperature for performing the orientation is not lower than a main melt peak temperature of the ethylene based polymer, and not higher than a main melt peak temperature of the crystalline olefinic polymer. It is not preferred to perform the orientation at a temperature lower than a main melt peak temperature of the ethylene based polymer, because the tearability (hand-tearability) of the resulting laminated uniaxial oriented sheet or substrate is deteriorated. On the other hand, it is not also preferred to perform the orientation at a temperature higher than a main melt peak temperature of the crystalline olefinic polymer, because orientation of the crystalline olefinic polymer hardly occurs, so that the laminated uniaxial oriented sheet or substrate having a sufficient tensile breaking strength can hardly be obtained, and the sheet or substrate melt-adheres to the heat roll during the orientation process. Herein, "a main melt peak temperature" is understood as meaning a peak temperature of the largest peak in the fusion endothermic curve obtained by a differential scanning calorimeter(DSC) manufactured by Perkin Elmer Ltd.

The heat shrinking percentage of the substrate constituting the present adhesive tape is not higher than about 8%, preferably not higher than about 5%, more preferably not higher than about 2%. This is because of an operational stability in the heat-drying step of the adhesive tape production process, a dimensional stability of the substrate and a problem of winding up the adhesive tape to a roll. The heat shrinking percentage in the present invention is a percent value obtained by dividing a difference between the after-heating length and the before-heating length in the orientation direction by the before-heating length, provided that a sample having a known length is heated at 110°C. The value decreases with decrease in the heat shrinkage in the orientation direction. The "problem of winding up" is such that a roll of the adhesive tape is wound up closely with a lapse of time, so that the adhesive exudes from the edges of the adhesive tape

A method for obtaining the substrate having the heat shrinking percentage of not less than about 8% includes: a method(1) comprising carrying out the orientation of the laminated non-oriented sheet at a temperature higher than that of the aforementioned heat-drying step; a method(2) comprising further subjecting the resulting laminated uniaxial oriented sheet to heat-set treatment; and a method(3) comprising a combination of the method(1) and the method(2).

In the method(2), a temperature of the heat-set treatment is preferably higher than the orientation temperature by, for example, about 5 to 40°C, more preferably higher than the orientation temperature and higher than that in the heat-drying step by, for example, about 5 to 40°C.

The heat-set treatment can be carried out, for example, in a manner such that the laminated uniaxial oriented sheet is passed through a heated oven, or the laminated uniaxial oriented sheet is brought into contact with a heated roll, or the laminated uniaxial oriented sheet is passed through at least two heated rolls while rolling up, wherein the lapping speed of at least one latter roll is controlled so as to be somewhat lower than that of at least one first roll, so that the desired heating treatment can be performed while relieving measure in a lengthwise direction of the tape.

The adhesive used in the present invention is not particularly limited, and may be any one known in the field of adhesive tapes. For example, acrylic adhesives, vinyl ether adhesives, silicone adhesives and rubber adhesives are enumerated. Types thereof are also not particularly limited, and may be any one, such as solution type, emulsion type and hot melt type.

A manner of coating the substrate with the adhesive is not particularly limited, and may be any one known in the field of the adhesive tape, such as , for example, a roll coater method. In order to increase an affinity of the adhesive with the surface of the substrate to be coated with the adhesive, in other words, in order to improve an anchoring property of the adhesive to the substrate, the surface of the substrate to be coated with the adhesive may be subjected to corona discharge treatment or primer treatment in advance. These treatments are well known in the field of the adhesive tape.

With respect to the ethylene based polymer used in the present invention, $F_\varepsilon$ , namely, the orientation function of a crystallographic "c" axis determined by an infrared dichroism analysis is not more than about $2.0 \times 10^{-1}$, preferably not more than about $1.5 \times 10^{-1}$, thereby obtaining the laminated uniaxial oriented sheet or the substrate of the adhesive tape superior in its tearability (hand-tearability). Herein, the orientation function of the crystallographic "c" axis, $F_\varepsilon$ , is an index indicating the orientation degree of the crystallographic "c" axis.

The orientation function is a function indicating an orientation degree of a certain crystallographic axis in a standard direction Z, which is defined as follows by Stein (R.S.Stein, J. Polym. Sci., 31, 327(1958)) based on the Hermans' idea ((a) P.H.Hermans, P. Platzek, Kolloid-Z., 88, 68(1939); (b) J.J.Hermans, P.H.Hermans, D.Vermaas, A.Weidinger, Rec. trav. chim. Pays-Bas, 65, 427(1946)):

$$F\alpha, z = 1/2 \times (3\langle \cos^2 \phi\alpha, z \rangle - 1)$$

$$F\beta, z = 1/2 \times (3\langle \cos^2 \phi\beta, z \rangle - 1)$$

$$F\varepsilon, z = 1/2 \times (3\langle \cos^2 \phi\varepsilon, z \rangle - 1)$$

wherein $\alpha$, $\beta$, $\varepsilon$ and z are "a" axis direction, "b" axis direction, "c" axis direction and standard direction, respectively, and $\langle \cos^2 \phi \rangle$ is a square average(an average of all fine crystals) of a cosine of an angle $\phi$ formed by the crystallographic axis direction with the standard direction.

Table 1

| Parameter | Orientation relating to standard direction Z | | |
|---|---|---|---|
| | Parallel | Random | Perpendicular |
| $\langle \cos^2 \phi \rangle$ | 1 | 1/3 | 0 |
| F | 1 | 0 | -1/2 |

As shown in Table 1, a value of $\langle \cos^2 \phi \rangle$ and a value of F relating to a certain crystallographic axis are 1 and 1, respectively, when both a certain crystallographic axis direction and the standard direction Z are completely the same, namely, both are parallel, and 1/3 and 0, respectively, when both are random, and 0 and -1/2, respectively, when both are completely perpendicular to each other. In this relation, the following equation is given, when the crystallographic axes are at right angles:

$$\cos^2\phi\alpha,z+\cos^2\phi\beta,z+\cos^2\phi\varepsilon,z=1$$

From the above equation, there can be given the following equation, from which the orientation function of the crystallographic "c" axis can be determined, when respective orientation functions of the crystallographic "a" and "b" axes are found:

$$F\alpha,z+F\beta,z+F\varepsilon,z=0.$$

The orientation function $F\varepsilon$ of the crystallographic "c" axis in the present invention is determined by the infrared dichroism analysis analysis described below.

Absorption to polarized infrared rays is in proportion to both a changing direction of transition moment (a direction in which dipole moment in a molecular vibration changes) and a square average of cosine of an angle in a vibration direction of electric vector of polarized infrared rays.

Now, providing that an integrated absorption degree to a polarized light relating to a crystal phase having a unit volume is designated $(a_c)$, an integrated absorption degree to a polarized light incoming from a direction perpendicular to the sample and having an electric vector in a direction parallel to the standard direction, $(ac)_\parallel$, and an integrated absorption degree to a polarized light having an electric vector in a direction perpendicular to the standard direction, $(a_c)\perp$, are given as follows in the case of a uniaxial orientation (Hirokazu Takahara, Hiromichi Kawai, SENI TO KOGYO (Fiber and Industry), 21, No. 7, 77(1965));

$$(a_c)\parallel=Kc\langle\cos^2\phi\rangle$$

$$(a_c)\perp=Kc\langle\sin^2\phi\rangle/2=Kc(1-\langle\cos^2\phi\rangle)/2$$

wherein Kc is a proportion constant and $\phi$ is an angle formed by the standard direction with the transition moment.

The above equations are rewritten as follows using the aforementioned orientation function,

$$(a_c)\parallel=Kc(2F+1)/3$$

$$(a_c)\perp=Kc(1-F)/3$$

and from these equations, the following equations relating to the dichroism and the orientation function are given,

$$D\equiv(a_c)\perp/(a_c)\parallel=(1-F)/(2F+1)$$

$$F=(1-D)/(2D+1)=3/2\times(1/(1+2/D)-1/2$$

wherein D is an infrared dischroism in an optional absorption band.

In order to obtain the orientation function of a crystallographic axis from the infrared dischroism, it is necessary to know an absorption band indicating a transition moment parallel to the said crystallographic axis. With respect to the ethylene based polymer, it is known that the transition moments of bands, 730 cm$^{-1}$ and 720 cm$^{-1}$ are those parallel to the crystallographic "a" and "b" axes, respectively (Hiroyuki Tadokoro, KOBUNSHI-JIKKEN KOZA(The Lecture on High Molecular Experiment), Vol.2, KOBUNSHI NO KOTAIKOZO(Solid Structure of High Molecular, p.149(1959), published by KYORITSU SHUPPAN; Hiroyuki Tadokoro, Yozo Chatani, KOBUNSHI NO KOZO TO BUSSEI(Structure and Physical Property of High Molecular), p.61(1963), published by MARUZEN).

In the present invention, the infrared dichroism, D730 and D720, in the bands of 730 cm$^{-1}$ and 720 cm$^{-1}$, respectively, are calculated, providing that the standard direction is regarded as the orientation direction, and absorption degrees in each peak top of the said bands, which are approximate to the integrated absorption degrees, are used as $(a_c)\perp$ and $(a_c)\parallel$, respectively.

Using the following equations, wherein the resulting D730 and D720 values are used, respective orientation functions of the crystallographic "a" and "b" axes in the machine direction relating to the ethylene based polymer, $F\alpha$ and $F\beta$ are obtained.

$$F\alpha=3/2\times(1/(1+2/D730)-1/2$$

$$F\beta=3/2\times(1/(1+2/D720)-1/2$$

Respective crystallographic axes in the rhombic system of the ethylene based polymer are in right angles, and therefore the orientation function of the crystallographic "c" axis in the machine direction, $F_\varepsilon$, can be obtained using the following equation, wherein the values obtained above are used.

$$F\alpha + F\beta + F\varepsilon = 0$$

According to the present invention, a laminated uniaxial oriented sheet superior in its tearability(hand-tearability) in the transverse direction, and also superior in its tensile breaking strength in the machine direction and heat-resisting property can be provided with high efficiency.

Further, according to the present invention, an adhesive tape which is hardly heat-shrinkable, superior in its tensile breaking strength in the machine direction and satisfactory in its hand-tearability can be provided with high efficiency. The adhesive tape is particularly suitable for packing materials.

The present invention is explained in more detail with reference to the following Examples, which are only illustrative and not to be construed to limit the scope of the present invention.

Values of physical properties in the Examples and the Comparative Examples were obtained in the following manners.

1. Main melt peak temperature(Tm)

With respect to the ethylene based polymer, a sheet of about 0.5 mm thickness obtained by a hot-press method was cut out to prepare a specimen of about 10 mg. The specimen was put on a sample pan installed in a differential scanning calorimeter (DSC) manufactured by Perkin Elmer Ltd., pre-heated at 150°C for 5 minutes, thereafter cooled to 40°C at a rate of 1°C/min., then kept at 40°C for 5 minutes, and thereafter heated to 150°C at a rate of 10°C/min. A peak temperature of the largest peak in the fusion endothermic curve obtained was assigned as a main melt peak temperature(Tm).

With respect to the crystalline olefinic polymer, using the aforementioned differential scanning calorimeter, a sample of about 10 mg was melt in an atmosphere of nitrogen gas at 220°C for 5 minutes, thereafter cooled to 40°C at a rate of 5°C/min., and then heated to 200°C at a rate of 5°C/min. A peak temperature of the largest peak in the fusion endothermic curve obtained was assigned as a main melt peak temperature(Tm).

Using the differential scanning calorimeter, indium (In) was subjected to measurement of a main melt peak temperature at a temperature-raising rate of 5°C/min., and it was found to be 156.6°C.

2. Ethylene unit content

Measured according to $^{13}$C-NMR method based on the method described in p.615 to 616 of KOBUNSHI BUNSEKI HANDOBUKKU(Hand book of high molecular analysis) published by KINOKUNIYA SHOTEN(Book store) in 1995.

3. Propylene unit content

Measured according to $^{13}$C-NMR method based on the method described in p.615 to 619 of KOBUNSHI BUNSEKI HANDOBUKKU(Hand book of high molecular analysis) published by KINOKUNIYA SHOTEN(Book store) in 1995.

4. Vinyl acetate unit content

Measured according to the method prescribed in JIS K6730.

5. Melt flow rate (MFR)

The ethylene based polymer was measured according to JIS K7210, Condition 4 of Table 1, and the propylene based polymer was measured according to JIS K7210, Condition 14 of Table 1.

6. Orientation function $F_\varepsilon$ of crystallographic c axis

After setting a polarized plate to Fourier' transduction type infrared spectrophotometer manufactured by Perkin Elmer Ltd., and then measuring the background, films were set respectively in a manner such that the orientation direction of one film was parallel with the direction of polarized light, and that of the other film was vertical thereto. The measurements were carried out under the following conditions.

Measuring mode : Abs
Detector : DTGS(Deuterated Triglycine Sulfate)detector
Resolving power : 4 cm$^{-1}$
Scanning frequency : 16

Using the obtained infrared dichroism, D730 and D720, in respective bands of 730 cm$^{-1}$ and 720 cm$^{-1}$ in the spectra, and the following equations(1) and (2), F$\alpha$ and F$\beta$ were calculated, and then using the values obtained and the following equation(3), F$\epsilon$ was calculated.

$$F\alpha=3/2\times(1/(1+2/D730)-1/2 \qquad\qquad (1)$$

$$F\beta=3/2\times(1/(1+2/D720)-1/2 \qquad\qquad (2)$$

$$F\alpha+F\beta+F\epsilon=0 \qquad\qquad (3)$$

7. Tearability(Hand-tearability)

The sheet or the adhesive tape was cut by hand, and the tearing condition was judged based on the following criteria.

◯ :     cut straight in the transverse direction
X :     torn in the machine direction

8. Tensile breaking strength

Tensile breaking strength in the machine direction was measured according to the method prescribed in JIS K6781.

9. Heat-resisting temperature (Heat-resisting property)

Upper 2.5 cm and lower 2.5 cm portions of a strip having 3 cm width×14cm length prepared from the sheet were held with clips, respectively, and a weight of 10 g was hung at the lower portion. The highest atmospheric temperature at which the strip was left unbroken even after a one hour lapse under said conditions was assigned as the heat-resisting temperature.

10. Heat shrinking percentage

A specimen of 5 cm×5 cm was dipped in a silicone oil bath kept at 110°C for 30 minutes, and then the length in the orientation direction was measured. It was expressed by the value (percentage) obtained by dividing the difference between the after-dipping length and the before-dipping length by the before-dipping length.

Example 1

Noblen FM401 manufactured by Sumitomo Chemical Co. Ltd. (a trademark of the company, a propylene-ethylene random copolymer of Tm = 142°C, MFR(230°C) = 7.5 g/10 min., propylene unit content = 96.3% by weight, ethylene unit content = 3.7% by weight), and Sumikathene L211F manufactured by Sumitomo Chemical Co., Ltd. (a trademark of the company, a low density polyethylene of Tm = 111°C, MFR = 2 g/10 min., d = 0.924 g/cm$^3$) were used as the crystalline olefinic polymer and the ethylene based polymer, respectively.
Using a 2-kind, 3-layer co-extrusion T die film molding machine manufactured by Modern Machinery Co., said crystalline olefinic polymer and said ethylene based polymer were simultaneously extruded to form a film with an outer layer-extruder and an inner layer-extruder, respectively, at a die temperature of 230 °C, and a drawing speed of 3.5 m/min., thereby obtaining a dry 2-kind, 3-layer sheet of an outer layer(20 μm thick) / an inner layer(160 μm thick) / another outer layer(20 μm thick).
Using a tenter type longitudinally stretching machine manufactured by Japan Steel Works, Ltd., the above-obtained dry sheet was uniaxial-oriented in the machine direction to obtain a 2-kind, 3-layer uniaxial oriented sheet having a total thickness of 39 μm. Evaluation results of the resulting laminated uniaxial oriented sheet were as shown in Table 2.

Example 2

Example 1 was repeated, except that Evatate D2021F, manufactured by Sumitomo Chemical Co. Ltd. (a trademark of the company, an ethylene-vinyl acetate copolymer of Tm = 95°C, MFR = 2 g/10 min., ethylene unit content = 90% by weight, vinyl acetate unit content = 10% by weight) was used as the ethylene based polymer, whereby a 2-kind, 3-layer uniaxial oriented sheet having a total thickness of 37 μm was obtained. The evaluation results of the resulting laminated uniaxial oriented sheet were as shown in Table 2.

Table 2

|  | Example 1 | Example 2 |
|---|---|---|
| Fε | $0.9 \times 10^{-1}$ | $0.8 \times 10^{-1}$ |
| Tearability | ○ | ○ |
| Tensile breaking Strength(kg/cm$^2$) | 355 | 382 |
| Heat resisting Temperature(°C) | 140 | 140 |

Example 3

Evatate D2021F manufactured by Sumitomo Chemical Co. Ltd. (a trademark of the company, an ethylene-vinyl acetate copolymer of Tm = 95°C, MFR = 1.4 g/10 mm., vinyl acetate unit content = 10% by weight), and Noblen W101 manufactured by Sumitomo Chemical Co., Ltd. (a trademark of the company, a propylene homopolymer of Tm = 165°C, MFR(230°C) = 8.0 g/10 min.) were used as the ethylene based polymer and the crystalline olefinic polymer, respectively.

Using a 2-kind, 3-layer co-extrusion T die film molding machine manufactured by Modern Machinery Co., said crystalline olefinic polymer and said ethylene based polymer were simultaneously extruded to form a film with an outer layer-extruder and an inner layer-extruder, respectively, at a die temperature of 230°C and a drawing speed of 3.5 m/min., thereby obtaining a dry 2-kind, 3-layer sheet (a laminated non-oriented sheet) of an outer layer(60 μm thick) / an inner layer(180 μm thick) / another outer layer(60 μm thick).

Using a six-roll stretching machine manufactured by Terao Seiki, Ltd., the above-obtained dry sheet was uniaxial-oriented at an orientation temperature of 140°C by 2.8 times length in the machine direction to obtain a 2-kind, 3-layer uniaxial oriented sheet having a total thickness of 100 μm as a substrate.

Using a roll coater, one surface of the above-obtained substrate was coated with an adhesive solution (about 4000 centipoise) having a solid content of 40% by weight, prepared by dissolving a copolymer of butyl acrylate (content in the copolymer = 80% by weight) and 2-ethylhexyl acrylate (content in the copolymer = 20% by weight) in a mixed solvent of 50% by volume of ethyl acetate and 50% by volume of toluene, and passed through a heat-drying oven of 110°C over about 3 minutes, thereby obtaining an adhesive tape having an adhesive layer of 30 μm thickness. The evaluation results of the adhesive tape were as shown in Table 3.

Example 4

Example 3 was repeated, except that the dry sheet obtained in the same manner as in Example 3 was uniaxial-oriented by 2.8 times length in the machine direction at an orientation temperature of 110°C, and thereafter a heat set treatment was conducted in a manner such that the resulting oriented sheet was passed through a space between two rolls of 140°C at a speed of 9 m/min., while winding up thereon, thereby obtaining an adhesive tape. The evaluation results of the adhesive tape obtained were as shown in Table 3.

Comparative Example 1

Example 3 was repeated, except that the dry sheet obtained in the same manner as in Example 3 was uniaxial-oriented at an orientation temperature of 80°C to obtain a substrate, thereby obtaining an adhesive tape. The evaluation results of the adhesive tape were as shown in Table 3.

Comparative Example 2

Example 3 was repeated, except that the dry sheet obtained in the same manner as in Example 3 was uniaxial-oriented at an orientation temperature of 110°C to obtain a substrate, thereby obtaining an adhesive tape. The evaluation results of the adhesive tape were as shown in Table 3.

Table 3

|  | Tensile breaking strength of substrate (kg/cm$^2$) | Hand-tearability | Heat shrinking percentage of substrate (%) | Orientation function F$\varepsilon$ ($\times 10^{-1}$) |
|---|---|---|---|---|
| Example 1 | 294 | ◯ | 4.0 | 0.16 |
| Example 2 | 295 | ◯ | 1.0 | -0.28 |
| Comparative Example 1 | 548 | X | 31.6 | 4.70 |
| Comparative Example 2 | 293 | ◯ | 9.7 | 0.03 |

Each of the references referred to above is incorporated herein by reference in its entirety.

**Claims**

1. A laminated uniaxial oriented sheet comprising:

   (i) a layer of a crystalline olefinic polymer; and
   (ii) a layer of an ethylene based polymer having an "F$\varepsilon$" value of not more than about $2.0 \times 10^{-1}$;
   wherein "F$\varepsilon$" is an orientation function of a crystallographic "c" axis determined by an infrared dichroism measurements.

2. The laminated uniaxial oriented sheet according to Claim 1, wherein the crystalline olefinic polymer comprises, as a main component, a crystalline olefinic polymer having a repeating unit derived from an $\alpha$-olefin having not less than 3 carbon atoms.

3. The laminated uniaxial oriented sheet according to Claim 1, wherein the crystalline olefinic polymer comprises a crystalline propylene based polymer.

4. The laminated uniaxial oriented sheet according to Claim 1, wherein the ethylene based polymer comprises a low density polyethylene, an ethylene-vinyl acetate copolymer, an ethylene-acrylic ester copolymer, an ethylene-methacrylic ester copolymer, or a mixture thereof.

5. A process for producing a laminated uniaxial oriented sheet, which comprises the steps of:

   (I) obtaining a laminated non-oriented sheet comprising (i)a layer of a crystalline olefinic polymer, and (ii)a layer of an ethylene based polymer; and
   (II)orienting the laminated non-oriented sheet in a uniaxial direction at a temperature which is not lower than a main melt peak temperature of the ethylene based polymer, and not higher than a main melt peak temperature of the crystalline olefinic polymer.

6. The process for producing a laminated uniaxial oriented sheet according to Claim 5, wherein the crystalline olefinic polymer comprises, as a main component, a crystalline olefinic polymer having a repeating unit derived from an $\alpha$-olefin having not less than 3 carbon atoms.

7. The process for producing a laminated uniaxial oriented sheet according to Claim 5, wherein the crystalline olefinic polymer comprises a crystalline propylene based polymer.

8. The process for producing a laminated uniaxial oriented sheet according to Claim 5, wherein the ethylene based polymer comprises a low density polyethylene, an ethylene-vinyl acetate copolymer, an ethylene-acrylic ester copolymer, an ethylene-methacrylic ester copolymer, or a mixture thereof.

9. An adhesive tape comprising (a)a substrate and (b)a layer of an adhesive, wherein the substrate comprises a laminated uniaxial oriented sheet and has heat shrinking percentage of not higher than about 8%, and the laminated uniaxial oriented sheet comprises (i)a layer of a crystalline olefinic polymer and (ii)a layer of an ethylene based polymer.

10. The adhesive tape according to Claim 9, wherein the crystalline olefinic polymer comprises a crystalline propylene based polymer.

11. The adhesive tape according to Claim 9, wherein the ethylene based polymer comprises a low density polyethylene, an ethylene-vinyl acetate copolymer, an ethylene-acrylic ester copolymer, an ethylene-methacrylic ester copolymer, or a mixture thereof.

12. The adhesive tape according to Claim 9, wherein the ethylene based polymer has an $F_\varepsilon$ value of not more than $2.0 \times 10^{-1}$, wherein $F_\varepsilon$ is an orientation function of a crystallographic "c" axis determined by an infrared dichroism measurements.

13. The adhesive tape according to Claim 9, wherein the laminated uniaxial oriented sheet comprises three layers, including an inner layer, which is the ethylene based polymer layer, and two outer layers, each of which is a layer that corresponds to the crystalline olefinic polymer layer.

14. A process for producing an adhesive tape, which comprises the steps of:

(I) obtaining a laminated non-oriented sheet comprising (i)a layer of a crystalline olefinic polymer, and (ii)a layer of an ethylene based polymer;
(II) orienting the laminated non-oriented sheet in a uniaxial direction at a temperature which is not lower than a main melt peak temperature of the ethylene based polymer, and not higher than a main melt peak temperature of the crystalline olefinic polymer to obtain a substrate of a laminated uniaxial oriented sheet having a heat shrinking percentage of not higher than about 8%; and
(III) coating the substrate with an adhesive.

15. A process for producing an adhesive tape, which comprises the steps of:

(I) obtaining a laminated non-oriented sheet comprising (i)a layer of a crystalline olefinic polymer, and (ii)a layer of an ethylene based polymer;
(II) orienting the laminated non-oriented sheet in a uniaxial direction at a temperature which is not lower than a main melt peak temperature of the ethylene based polymer, and not higher than a main melt peak temperature of the crystalline olefinic polymer to obtain a laminated uniaxial oriented sheet;
(III) heat-setting the laminated uniaxial oriented sheet to obtain a substrate having a heat shrinking percentage of not higher than about 8%; and
(IV) coating the substrate with an adhesive.

16. The process for producing an adhesive tape according to Claim 14 or 15, wherein the crystalline olefinic polymer comprises a crystalline propylene based polymer.

17. The process for producing an adhesive tape according to Claim 14 or 15, wherein the ethylene based polymer comprises a low density polyethylene, an ethylene-vinyl acetate copolymer, an ethylene-acrylic ester copolymer, an ethylene-methacrylic ester copolymer, or a mixture thereof.

18. The process for producing an adhesive tape according to Claim 14 or 15, wherein the ethylene based polymer has an $F_\varepsilon$ value of not more than $2.0 \times 10^{-1}$, wherein $F_\varepsilon$ is an orientation function of a crystallographic "c" axis determined by an infrared dichroism measurements.

19. The process for producing an adhesive tape according to Claim 14 or 15, wherein the laminated uniaxial oriented sheet comprises three layers, including an inner layer, which is the ethylene based polymer layer, and two outer layers, each of which is a layer that corresponds to the crystalline olefinic polymer layer.